# EUROPEAN PATENT APPLICATION

(11) **EP 4 818 936 A1**
(43) Date of publication of application: **07.10.2026**
(21) Application number: 26168470.8
(22) Date of filing: 27.03.2026
(51) Int. Cl.: G06F 21/32, B60R 25/24, G06F 21/33, H04L 9/08, H04L 9/40, H04W 12/08

(54) **A METHOD AND A DEVICE FOR PROVIDING ACCESS TO AN ASSET**

(30) Priority: 30.03.2025 IN 202541031289
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The subject matter discloses a method 200, 300, 400 and a device 102 for providing access to an asset 104. The method 300 comprises receiving an access request from a user device wherein the access request comprises a digital signature encrypted with a private key. The method 300 comprises verifying the digital signature using a public key stored in a blockchain, sending a request to a smart contract on the blockchain to verify the access request of the user device on successful verification of the digital signature, receiving a verification result from the smart contract. The method 300 comprises providing the access to the asset if the verification result indicates that the access request meets the conditions in the smart contract, and denying the access to the asset if the verification result indicates that the access request does not meet the conditions in the smart contract.

## Description

### TECHNICAL FIELD

The claimed subject matter in general relates to providing access to assets. The claimed subject matter in particular relates to providing access rights to different kinds of assets based on the access rights associated with a user device.

### BACKGROUND

Presently, the accessibility to different assets are provided in different ways. Traditional access systems rely on physical keys, RFID cards, or digital key fobs, a mobile phone etc. which pose security and operational challenges. The assets could be a vehicle, a server computer, a laboratory, hospital equipments, high security establishments etc.

Traditional key-based systems are vulnerable to theft, cloning, or hacking, leading to unauthorized access to assets.

Conventional access control relies on centralized databases, which are prone to cyber-attacks, data breaches, and unauthorized modifications.

Existing systems store access logs in proprietary databases, which can be altered or deleted, making security audits difficult.

Revoking and reissuing access after a lost or stolen key can be time-consuming and prone to security loopholes.

Granting temporary access or limited access is difficult and often involves insecure methods such as manually sharing keys.

Users who lose access due to lost devices or forgotten credentials often face a cumbersome and unreliable recovery process.

In the digital age of providing security digitally, the security may be compromised by unauthorized persons in many ways. For example, if the asset is especially a vehicle, the signals from the key fob may be recorded and played back later by unauthorized people to gain unauthorized access. The biometric data may be accessed from different sources and may be used to gain unauthorized access. The pre-stored user data/profiles in the vehicle controller may be tampered remotely to create new user data/profile to gain unauthorized access, as the user data is stored locally at only one place. Also the sharing of key-fobs with different users may have challenges of somebody making duplicate key-fobs and using them later for unauthorized access. Even if access permissions are given to authorized persons to access the vehicle, the authorized person may use the vehicle beyond the permitted duration, beyond the permitted location etc. as the permissions are centrally stored and are prone to manipulation. Also role based permissions i.e. owner, valet etc. cannot be assigned securely in the using the techniques. Hence there is a need to provide methods to assign access which is not prone to manipulations.

Some prior arts use above mentioned techniques and have the above mentioned challenges.

Therefore, there is a clear and pressing need to address the above-mentioned multifaceted challenges associated with security of accessing the assets. Existing technologies have made attempts to tackle these issues but often fall short in providing a comprehensive solution that balances security and reliability. The shortcomings of existing techniques, particularly with respect to unauthorized access, vulnerabilities to hacking, and the potential for bypassing security mechanisms, must be addressed to ensure that the assets remain secure in an increasingly complex environment.

The claimed subject matter addresses the above discussed issues.

### SUMMARY

The claimed subject matter is defined in the independent claims. Further details are defined in the dependent claims.

The subject matter discloses a system, device and method for providing access to an asset. The assets could be a vehicle, a server computer, a laboratory, hospital equipments, high security establishments etc. In the detailed description, vehicle is mentioned as asset more often only as an example, however the claimed subject matter is applicable to any asset which may need to provide controlled and different accesses for different users.

The subject matter discloses a method of user device registration for access of an asset. The method is performed by a user device. The method comprises receiving a user identification, verifying the user identification against a pre-stored user identification, generating a cryptographic key pair of a private key and a public key on successful verification of the user identification, storing the public key on a blockchain and storing the private key in the user device.

The subject matter discloses a method of providing access to an asset. The method performed by an access controller in the asset. The method comprises receiving an access request from a user device wherein the access request comprises a digital signature encrypted with a private key, verifying the digital signature using a public key stored in a blockchain, sending a request to a smart contract on the blockchain to verify the access request of the user device on successful verification of the digital signature, receiving a verification result from the smart contract, providing the access to the asset if the verification result indicates that the access request meets the conditions in the smart contract, and denying the access to the asset if the verification result indicates that the access request does not meet the conditions in the smart contract.

The subject matter discloses a method of verifying an access request. The method is performed by a smart contract on a blockchain. The method comprises verifying the access request against the conditions in the smart contract, sending a verification result as a success indicating that the access request meets the conditions in the smart contract or sending a verification result as a failure indicating that the access request does not meet the conditions in the smart contract.

### BRIEF DESCRIPTION OF THE DRAWINGS

The detailed description is described with reference to the accompanying figures. In the figures, similar reference numerals are used throughout the drawings to reference like features and components.
Figure 1A illustrates a system for providing access to an asset, where asset is a vehicle
Figure 1B illustrates a system for providing access to an asset, where asset is a server computer
Figure 2 illustrates a method of user device registration for access of an asset
Figure 3 illustrate a method of providing access to an asset
Figure 4 illustrate a method of verifying access request

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may refer to a two wheeled motor vehicle, a three wheeled motor vehicle or a car or any passenger motor vehicle or goods carrying motor vehicle. The term 'coupled' is used to indicate coupling between different elements, it may mean directly coupled or indirectly coupled through additional elements. The terms 'module' and 'component' may be used interchangeably. The term 'access' refers to 'opening a door of a vehicle', or 'unlocking a handle lock of a two wheeled motor vehicle' or providing access to 'computer server' etc. The terms 'user' and 'user device' may be used interchangeably. The term 'data' may refer to 'user data'.

Only the details/components required to describe the claimed subject matter in specific, are disclosed in this document. The details/components which are commonly known or understood by people skilled in the art may not be covered in this document.

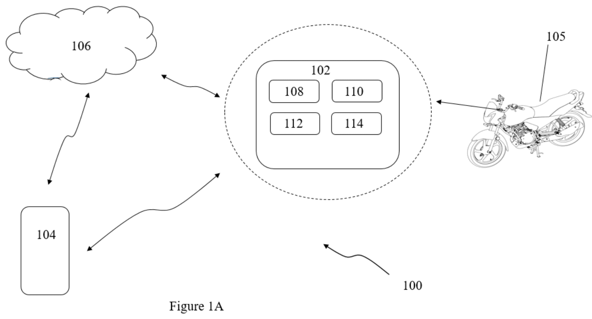

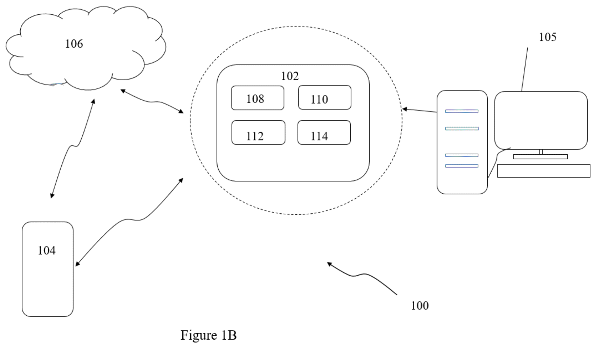

Figure 1A and Figure 1B disclose a system 100 for providing access to an asset 105. The system 100 comprises an access controller 102, a user device104, and a blockchain 106. The access controller 102 is referred as controller 102. The blockchain 106 is in a cloud server. In figure 1A the asset shown as a vehicle 105 as an example. In figure 1B the asset shown as a server computer 105 as an example.

Blockchain 106 is a shared ledger that facilitates the process of recording transactions and tracking assets in a network. All the network participants/nodes have access to the distributed ledger and its irreversible record of transactions. No participant can change or tamper with a transaction after it's been recorded to the shared ledger. The system 100 comprises various user devices and the asset controller 102 as participants/nodes in the blockchain 106.

To assist the transactions, a set of rules that are called a smart contract is stored on the blockchain 106 and executed on a transaction. A smart contract defines conditions for executing transactions. As the transactions occurs, each transaction is recorded as a "block" of data. The data block records the information of the transactions. The blocks confirm the exact time and sequence of transactions, and the blocks link securely together to prevent any block from being altered or a block being inserted between two existing blocks. Each additional block strengthens the verification of the previous block and hence the entire blockchain 106.

As the blockchain 106 is accessible only by members, the blockchain 106 provides secure, accurate and timely data. The blockchain 106 records are shared only with network members to whom accesses are granted Consensus on data accuracy is required from all network members, and all validated transactions are irreversible because they are recorded permanently.

A Smart Contract is a computer program that directly and automatically controls the transactions between the parties under certain conditions. A smart contract works in the same way as a traditional contract while also automatically enforcing the contract.

Everyone node/participant on the network has a copy of the smart contract and it cannot be changed by one of the parties. A smart contract is replicated and distributed to all the nodes connected to the network. Once the smart contract is executed, all the parties see the same result.

Referring to figure 1A and 1B, the access controller 102 comprises a processor 108 and a memory 110 coupled to the processor 108, input output interfaces 112. In an embodiment the device 102 comprises a communication unit 114. In an embodiment the communication unit 114 may be external to the controller 102. In an embodiment the communication unit 114 may comprise a GSM module. The communication unit 114 handles the transmission and reception of data to and from the user device 104 and the blockchain 106. The communication unit 114 comprises a transmitter module to transmit data and a receiver module to receive data. The transmitter module and the receiver module may be implemented using hardware circuits, input output ports, firmware etc. The input output interfaces 112 may comprise input ports, output ports, cabling to control mechanical components to operate a lock and ignition unit of a vehicle 105.

The user device 104 may be a mobile phone or any other communication device. The user who wants to access the asset 105 needs to register the user device 104 and create the access permissions. To register as a user for the asset 105, the user opens an application on the user device 104 and provides user identification. The user identification may be through biometric data or through a password. Once the user identification is verified by the application, the user device 104 generates a cryptographic key pair of private key and a public key. The public key is stored on the blockchain 106 and the private key is stored in the user device 104. A message may be displayed on the user device 102 to indicate that the registration is successful. The biometric data may be a finger print data, a facial image, a voice authentication etc. The user identification is verified by comparing the received user identification with a pre-stored user identification. The user identifications may be pre-stored during a storing mode of the user device 104. The registration of the user is done only once.

A supervisory application which is authorized to regulate the permissions for accessing the assets, creates a smart contract. The supervisory application is not shown in figure 1, it may exist on a separate computer or on the user device 104.

The supervisory application receives inputs like, identification of the user/user device, role of the user, i.e. whether the user is the owner or a temporary user, access permissions requested, duration of access permissions etc. The supervisory application verifies whether the inputs are valid. Once the inputs are validated, a smart contract is created, the smart contract comprising the inputs provided by the user. The smart contract is stored in the blockchain 106.

Access permissions assigned to the user can be revoked or altered instantly by the supervisory application by updating the smart contract on the blockchain 106, ensuring that stolen or lost credentials are rendered useless.

The supervisory application verifies the biometric or user identification through the data stored earlier. Only the authorized users can create the smart contract. In an embodiment, along with the biometric data, the supervisory application verifies additional user identification like password, digital signature etc. to implement multi-factor authentication. The smart contract automatically verifies the duration of the permissions and deletes the permissions once the duration is exceeded. Smart contract verifies the roles of the user, whether the user is owner or a temporary user for every access request and accordingly provides access. For a temporary user, the permissions of access may be restricted, for example, restrictions may be with regard to duration of usage/access, restriction on location of usage, some functions or attributes of the asset etc. If the role is of a owner, no restrictions are applied for the access.

In an embodiments, the personal data of the user may be stored locally/in centralized server and only the digital signature or the hash-keys are stored in the blockchain 106. This is to ensure, the personal data is accessible only by the owner.

In an embodiment, the system 100 is completely implemented using a blockchain. In an embodiment, partial user data may be stored in centralized server and other part may be stored in the blockchain 106, based on the criticality of the data. This ensures that the data is available to the authorized persons where it is required.

When the user wants to access the asset 105 the user opens an application on the user device 104 and requests for the access for the asset 105. The user device 104 generates an access request. The access request includes a digital signature encrypted with the user's private key stored in the user device 104. The access request is sent to the asset controller 102 in the asset 105.

The access controller 102 in the asset 105 receives the access request through the communication unit 114, retrieves the user's public key from the blockchain 106 and verifies the digital signature to ensure the request is authentic. Once the signature is verified successfully, a request is sent to the smart contract in the blockchain 106 for verifying the access request. The asset controller 102 comprises a verification module to verify the signature, an access providing module to provide access to the asset 105. The verification module and the access providing module may be implemented using hardware, input output interfaces 112, firmware etc. In an embodiment verification module verifies the user identification associated with the user device (104), stored on the blockchain (106).

The smart contract on the blockchain checks whether the user has the appropriate role, i.e. owner, temporary user etc. and whether the access request meets any time-based or geo-fencing restrictions to determine if the user is authorized to access the asset at that specific time and place.. It also checks the asset's status, i.e. normal mode, maintenance mode, discarded mode etc. The smart contract verifies conditions like duration of access requested, allowable start date and end date of access, etc.

The smart contract verifies the requested date against the access permissions start date and end date. If the requested date/duration falls outside the access permissions start date and end date, the access is denied.

If the status of asset 105 is not normal, the access is denied i.e. if the status of the asset is maintenance or discarded, the access is denied.

If the asset 105 or the user device 104 is outside the geo-fencing area, the access is denied. If the user/user device 104 has the role of 'owner' the functionalities of the asset 105 are not limited. If the user/user device 104 has the role of 'temporary user', some of the functionalities of the asset 105 may be limited. If the asset 105 is a vehicle, then the maximum speed and range of the vehicle, duration of usage of the vehicle, may be limited to pre-defined values.

If the access permissions are successfully validated by the smart contract, the smart contract sends a verification result as success indicating that the access request meets the conditions in the smart contract. Otherwise the smart contract sends a verification result as failure indicating that the access request does not meet the conditions in the smart contract.

The details of the access request are logged into a report on the blockchain 106 by the smart contract. The report may comprise, the date and time of access, user identification, if the verification is failure or success, the reason for failure, no. of attempts from the same user device etc.

The access controller 102 receives the verification result from the smart contract. If the verification result indicates that the access request meets the conditions in the smart contract, the asset controller provide access to the asset 105. Providing access to the asset 105, if the asset is a vehicle, comprises unlocking the vehicle. In an embodiment the ignition unit in the vehicle is activated as part of providing access to the vehicle 105. Unlocking the vehicle 105 may comprise unlocking the door of a vehicle or unlocking the handle lock if the vehicle is a two wheeler. Unlocking of the door or unlocking of the handle lock may be performed by electro-mechanical components like a solenoid, a lever, a cable etc. Activation of the ignition unit may be performed by connecting the ignition unit to a battery in the vehicle using an electronic switch. Providing access to the asset 105 is performed by access providing module using the input output interfaces 112.

If the asset 105 is a server computer, for example, the access may be given to identified folders, files, data bases, confidential information etc.

In an embodiment, the asset controller 102 has a fall back solution if the response from the smart contract is not received within a pre-defined duration because of some network issues. The fall back solution comprises the asset controller 102 itself verifying the access request by checking the conditions for granting the access to the asset 105. The pre-defined may be set in the asset controller 102 using a hardware logic or hardcoded or through a setup mode.

The use of blockchain 106 as part of the system 100, provides transparent and secure way of accessing the asset 105. As no single party is allowed to change the contents of the blockchain 106, i.e. the conditions for any transaction to take place, the contents of blockchain 106 cannot be manipulated by unauthorized persons to gain the access to the asset 105. Hence the user data, i.e. identification of the user/user device, role of the user, i.e. whether the user is the owner or a temporary user, access permissions requested, duration of access permissions, geo-fencing restrictions etc. are securely stored on the blockchain 106, thereby eliminating the possibility of manipulation by unauthorized persons. Also the history of all the access requests with details, are stored in the blockchain 106 for any analysis in future.

The processors 104 may comprise one or more of central processing units (CPU), digital signal processors (DSP), application specific integrated circuits (ASIC), a controller, field programmable gate arrays (FPGA), or any other hardware device, a firmware device, or any combination of these. The processor 104 is configured using control registers, input output ports, firmware, input output interfaces 112 etc. to perform the operations described herein.

In an embodiment, the memory 106 may comprise one or more volatile and non-volatile memory components which are capable of storing data and instructions to be executed.

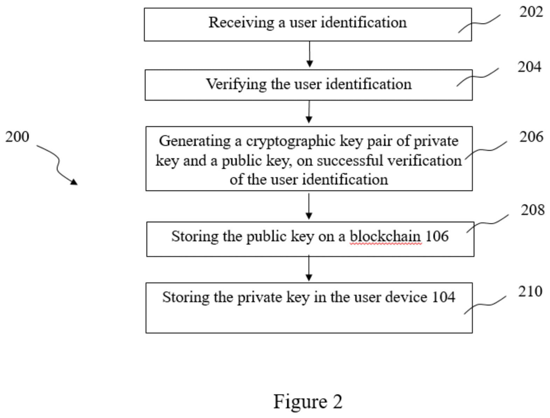

Figure 2 illustrates a method 200 of a user device registration for access of an asset 105 performed by a user device 104. Step 202 discloses receiving a user identification. Step 202 discloses verifying the user identification against a pre-stored user identification. The pre-stored user identification may be a biometric data or a password of the user device stored previously. Step 202 discloses generating a cryptographic key pair of private key and a public key, on successful verification of the user identification. Step 202 discloses storing the public key on a blockchain 106. Step 202 discloses storing the private key in the user device 104.

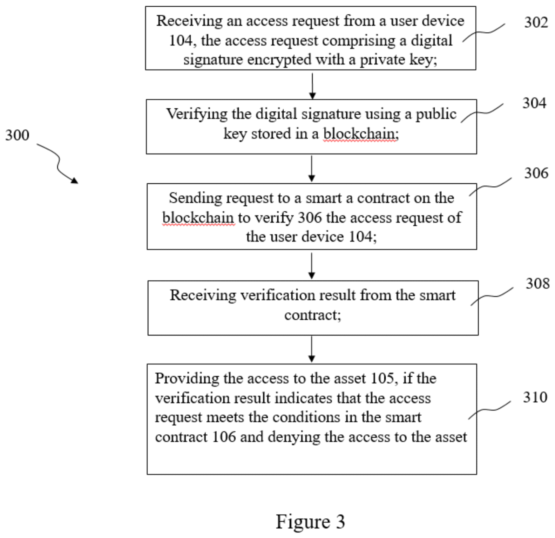

Figure 3 illustrates a method 300 of providing access to an asset (105), the method performed by the access controller 102. Step 302 discloses receiving an access request from a user device 104, the access request comprising a digital signature encrypted with a private key. Step 304 discloses verifying the digital signature using a public key stored in a blockchain. Step 306 discloses requesting a smart contract on the blockchain to verify the access request of the user device 104. Step 308 discloses receiving verification result from the smart contract. Step 310 discloses providing the access to the asset 105 if the verification result indicates that the access request meets the conditions in the smart contract and denying the access to the asset if the verification result indicates that the access request does not meet the conditions in the smart contract 106.

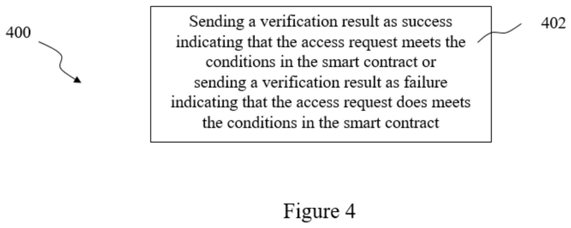

Figure 4 illustrates a method 400 of verifying the access request, the method performed by the smart contract on the blockchain 106. Step 402 discloses verifying the access request against the conditions in the smart contract, sending a verification result as success indicating that the access request meets the conditions in the smart contract or sending a verification result as failure indicating that the access request does meets the conditions in the smart contract

The disclosed subject matter has the following technical advantages.

The system 100 eliminates reliance on a central database, preventing single points of failure and unauthorized modifications of access records, logs.

The smart contract logs every access attempt, successful or failed, on the blockchain 106, ensuring an unalterable and transparent audit trail.

The system 100 uses public-private key encryption, ensuring that access credentials are not forged, duplicated, or intercepted.

The smart contract enforces predefined rules for access to assets, enabling real-time, automated decision-making without manual intervention.

Access permissions can be revoked instantly by updating the blockchain, ensuring that stolen or lost credentials are rendered useless.

The system 100 uses cryptographically signed and time-stamped transactions, preventing attackers from reusing or intercepting access requests.

The system 100 stores users' authentication credentials securely on the blockchain rather than on a vulnerable central server, reducing identity theft risks.

The system 100 which is blockchain-based, can be integrated across multiple assets, for example, vehicle brands, fleet management services, and IoT networks without interoperability issues.

The need for intermediaries (e.g., cloud authentication providers) is removed, reducing costs and the risk of data breaches.

Since blockchain 106 operates on a distributed network, it remains functional even if some nodes fail, ensuring continuous vehicle access availability.

### LIST OF REFERENCE NUMERALS

- 100: System to access an asset
- 102: Access controller
- 104: User devices
- 105: Asset
- 106: Blockchain
- 108: Processor
- 110: Memory
- 112: Input Output interfaces
- 114: Communication unit

## Claims

1. A method (200) of user device registration for access of an asset (105), performed by a user device (104), the method (200) comprising:
receiving (202) a user identification;
verifying (204) the user identification against a pre-stored user identification;
generating (206) a cryptographic key pair of a private key and a public key, on successful verification of the user identification;
storing (208) the public key on a blockchain (106); and
storing (210) the private key in the user device (104).

2. The method (200) as claimed in claim 1, wherein receiving the user identification from the user device (104) comprises at least one of:
receiving at least one biometric data; and
receiving a password.

3. The method (200) as claimed in claim 1, comprising storing the user identification in the blockchain (106);

4. A method (300) of providing access to an asset (105), the method performed by an access controller (102) in the asset (105), the method (300) comprising:
receiving (302) an access request from a user device (104), the access request comprising a digital signature encrypted with a private key;
verifying (304) the digital signature using a public key stored in a blockchain (106);
sending (306) a request to a smart a contract on the blockchain (106) to verify the access request of the user device (104), on successful verification of the digital signature;
receiving (308) a verification result from the smart contract;
providing (310) the access to the asset (105), if the verification result indicates that the access request meets the conditions in the smart contract, and denying the access to the asset (105) if the verification result indicates that the access request does not meet the conditions in the smart contract.

5. The method (200) as claimed in claim 1, comprises verifying the user identification associated with the user device (104), stored on the blockchain (106).

6. The method (300) as claimed in claim 4 comprising limiting identified functions of the asset (105) if the user device (104) has the temporary status.

7. The method (300) as claimed in claim 6 wherein limiting identified functions comprises at least one of limiting a speed of a vehicle (105) and limiting a range of the vehicle if the asset is a vehicle (105).

8. The method (300) as claimed in claim 4 comprising wherein providing the access to the asset (105) comprises at least one of unlocking the vehicle (105) if the asset is a vehicle (105) and activating ignition unit in the vehicle (105) if the asset is a vehicle (105).

9. The method (300) as claimed in claim 4 wherein providing the access to the asset comprises providing access rights to the identified folders, identified databases and identified confidential information, if the asset is a computer server (105), based on whether the user device (104) has a owner status or a temporary status.

10. A method (400) of verifying access request, the method performed by a smart contract on a blockchain (106), the method comprising:
sending a verification result as a success indicating that the access request meets the conditions in the smart contract:
if the requested date in the access request is within the start date and end date assigned in the smart contract for use of an asset (105) for a user device (104) originating the access request;
if the asset (105) is within the geo-fencing area assigned to the user device (104);
if the asset is in normal state; and
if the user device has either a 'owner' or 'temporary' status;
and
sending a verification result as a failure indicating that the access request does not meet the conditions in the smart contract:
if the requested date in the access request is outside the start date and end date assigned in the smart contract for use of an asset (105) for a user device (104) originating the access request;
if the asset (105) is outside the geo-fencing area assigned to the user device (104);
if the asset (105) is not in normal state; and
if the user device (104) has not a 'owner' status' or not a 'temporary' status.

11. The method (400) as claimed in claim 10 comprising logging the details of the access request in the blockchain (106).

12. An access controller (102) in an asset (105), the asset controller (102) comprising:
a processor (108);
a memory (110) coupled to the processor (108);
the processor (108) configured to
receive an access request from a user device (104), the access request comprising a digital signature encrypted with a private key;
verify the digital signature using a public key stored in a blockchain (106);
send a request to a smart a contract on the blockchain (106) to verify the access request of the user device (104), on successful verification of the digital signature;
receive a verification result from the smart contract;
provide the access to the asset (105), if the verification result indicates that the access request meets the conditions in the smart contract, and den the access to the asset (105) if the verification result indicates that the access request does not meet the conditions in the smart contract.

13. The access controller (102) as claimed in claim 12, the asset controller (102) comprising:
input output interfaces (112) connected to electro-mechanical components to perform at least one of:
unlocking a vehicle (105) when the asset is a vehicle (105); and
activating an ignition unit in the asset (105) if the asset is a vehicle (105).

14. The access controller (102) as claimed in claim 12, is implemented in an Engine Control Unit, ECU, in the vehicle (105)

15. The access controller (102) as claimed in claim 12, the asset controller (102) is an ECU.
